# EUROPEAN PATENT APPLICATION

(11) **EP 1 870 802 A1**
(43) Date of publication of application: **26.12.2007**
(21) Application number: 06012790.9
(22) Date of filing: 22.06.2006
(51) Int. Cl.: G06F 3/14

(54) **Method and device for making user equipment part of a display device**

(71) Applicant: Barco NV, 8500 Kortrijk (BE)
(72) Inventor: De Prycker, Martin, B-9100 Sint-Niklaas (BE); Paridaen, Stephan, B-9830 Sint-Martens-Latem (BE); Maenhout, Koenraad, B-8500 Kortrijk (BE); Verhenne, Bruno, B-8790 Waregem (BE)
(74) Representative: Bird, William Edward

(57) **Abstract**

The present invention relates to a method and device for communicating data to user equipment provided to a plurality of persons grouped within a geographical area, e.g. an audience or spectators, for example as used in concerts or sports events, in particular for example such that the user equipment effectively forms part of a light emitting display device.

## Description

### Technical field of the invention

The present invention relates to a method for communicating pixelated data of an image to a plurality of persons grouped within a geographical area, e.g. an audience or spectators, for example as used in concerts or sports events, and in particular concerns a system and method such that user equipment effectively forms part of a light emitting display device for displaying the image.

### Background of the invention

During concerts audience members are often given small white or coloured light sources that can be used during the show. Such light sources are independent and do not have any ability to interact; they are simply used by each audience member as desired.

WO 93/12614 describes an audience response system in which each audience member is provided with a reflective device which is, for example, green on one side and red on the other side. Light from a spotlight is reflected from the reflective devices and imaged by a conventional video camera. A computer receives the digitised and processed image, forms a map of the audience, and distinguishes the red from the green reflections. This data is then used by the computer to project an image onto a screen visible to the audience, the image being controlled by the red or green image reflections. The audience thus jointly controls the screen image, for instance for purposes of voting or playing a game. The system can also detect movement (direction and/or velocities) of each radiation source which data is aggregated and thereby manipulates the screen image. Also, the sources each may transmit coded information, such as Morse code or ASCII, to individually identify themselves.

### Summary of the invention

It is an object of the present invention to provide a system and method wherein user equipment effectively forms part of a light emitting display device.

The above objective is accomplished by a method and device according to the present invention.

In a first aspect, the present invention provides a method for communicating data suitable for use with a plurality of persons grouped within a geographical area, each person being at a location within the geographical area. The method comprises providing a plurality of persons with an individual lighting module, and communicating data to each of the lighting modules. The data communicated relates to an image to be displayed by a combination of the lighting modules. The data is thus pixelated data in an image. The image is provided from an image source such as an image generator and parts of the image are distributed among the individual lighting modules, e.g. via wireless communication. This way, the audience user equipment formed by the individual lighting modules forms part of the display device.

Advantageously, the lighting modules may be LED modules, which is power efficient, as LED modules consume only little power. Therefore, the lighting modules can easily be battery-operated.

The lighting modules may be multi-colour lighting modules, e.g. RGB modules. In this case, multi-colour images can be shown. Alternatively, the lighting modules may be monochrome modules, in which case "black and white" (depending on the colour of light emitted by the modules) or binary images may be shown. The images shown may be patterns, for example moving patterns, e.g. a white line from the centre of the hall towards the outer border of the hall is displayed and is rotating over 360° around the hall. On top of the display of the line, acts or movements of the persons may be requested, e.g. in case of the rotating line, the persons that see their lighting module turn on have to raise their hands, which will produce a Mexican wave effect.

The method may furthermore comprise determining the position of the individual lighting modules before communicating data to each of the lighting modules. Determining the position of the individual lighting modules may be performed by the lighting modules themselves, e.g. by using GPS positioning information. Alternatively, determining the position of the individual lighting modules may comprise detecting and localising the lighting modules. This detecting and localising may comprise communicating between neighbouring lighting modules so as to obtain identification data of neighbouring lighting modules. Alternatively, this detecting and localising may comprise using a camera or scanning light sensor for observing the plurality of persons. According to still an alternative embodiment, this detecting and localising the lighting modules may comprise using a transmitter sending a signal upon reception of which the lighting modules respond by sending their unique identification data. According to yet another alternative embodiment, the detecting and localising may comprise using a global positioning system.

Communicating data to each of the lighting modules may comprise sending complete image information to each lighting module which extracts information corresponding to its determined position. This way of working makes data transfer easier, as the data transferred is the same for each lighting module. Communicating data to each of the lighting modules may comprise sending complete information to each lighting module with geographical co-ordinates encoded therein. Geographical co-ordinates encoded in the information allow a device to extract the right information, i.e. the information the lighting module needs to display, from the complete image information. An advantage of transmitting with the data the geographical co-ordinates to which the data applies is that the user equipment itself, i.e. the lighting module, decides whether or not it is in the relevant area, and if so, displays the information.

Alternatively, communicating data to each of the lighting modules may comprise sending to each lighting module image information corresponding to its determined position. This way, location dependent data can be sent to people moving inside their group, e.g. moving audience or spectator members. This has the advantage that only limited data transfer to each lighting module takes place.

A method according to embodiments of the present invention may furthermore comprise synchronising data communicated to each of the lighting modules. This way, all lighting modules show part of the same image at the same time and less distortions during

In a second aspect, the present invention provides a display system for displaying an image. The display system comprises a transmission unit and a plurality of individual lighting modules adapted for being provided to a plurality of persons. Each lighting module comprises at least one light source having at least two states, a communication means for receiving data, and a processing means for bringing the at least one light source into one of its states depending on received data. The display system furthermore comprises means for determining the position of the individual lighting modules. The lighting modules are adapted for receiving data from the transmission unit and for displaying at least part of this received data as a pixel of the image to be displayed depending on the determined position of the lighting modules.

The means for determining the position of the individual lighting modules may be external to the lighting modules. Alternatively, the means for determining the position of the individual lighting modules may be internal to the lighting modules.

The lighting modules may be LED modules.

The lighting modules may be multi-colour lighting modules, such as e.g. RGB modules.

The lighting modules may be movable. They may be portable by a person.

The display system according to the present invention furthermore may comprise synchronisation means for synchronising display of the data received by the lighting modules (200).

In an aspect, the present invention forms lighting modules by adding intelligence and data communication capabilities, with the ability to emit light, possibly e.g. multi-colour light such as red, green and blue light from these light sources. Such lighting modules communicate with a transmission unit so as to receive data such that the user equipment effectively forms part of a (colour) light emitting display device.

Particular and preferred aspects of the invention are set out in the accompanying independent and dependent claims. Features from the dependent claims may be combined with features of the independent claims and with features of other dependent claims as appropriate and not merely as explicitly set out in the claims.

For the avoidance of doubt the present invention may be implemented in a dedicated device in stand-alone form (either hand-held or free-standing) or comprised within a larger device or host device/system comprising other functionality, for example a mobile communications device, PDA, personal computer, laptop, game console.

It will be understood by persons skilled in the art that many other systems, devices and methods can be advantageously designed incorporating the present invention.

The above and other characteristics, features and advantages of the present invention will become apparent from the following detailed description, taken in conjunction with the accompanying drawings, which illustrate, by way of example only, the principles of the invention. This description is given for the sake of example only, without limiting the scope of the invention. The reference figures quoted below refer to the attached drawings.

### Brief description of the drawings

Figure 1 is a flow diagram of a method according to embodiments of the present invention.
Figure 2 is a block diagram of a preferred embodiment of a lighting module.
Figure 3 shows a user, e.g. an audience member, holding a lighting module as illustrated in Figure 2.
Figure 4 shows a plan view of an example arena filled with people, e.g. audience members, each equipped with a lighting module, the lighting modules being driven so as to show an image.
Figure 5 shows a similar example area plan view with example location beacon transmitters.
Figure 6 illustrates a display system according to embodiments of the present invention, comprising a transmission unit and a plurality of lighting modules.
In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

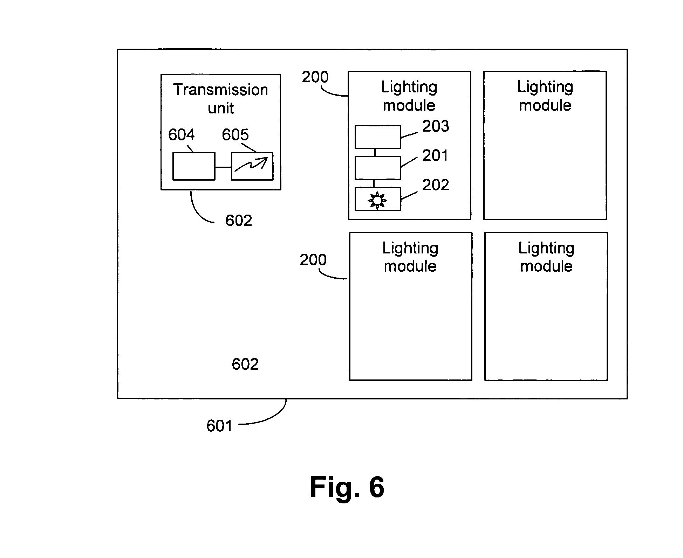

A wireless display system 601 according to embodiments of the present invention is illustrated in Figure 6 and comprises a transmission unit 602 and a plurality of receiving units 200. The transmission unit 602 comprises a central controller 604 and a first data communication means 605 for communicating data relating to an image to be displayed by a combination of receiving units 200. An image is provided by an image source such as a digital representation of an image, e.g. stored in memory or on a storage device such as an optical disk, solid state memory, tape or magnetic disk or the image is generated by an image generator. This image is to be distributed among the receiving units 200. Each of the receiving units 200, further called lighting modules, comprises at least one light source or light emitter 202 having at least two states, a data receiver or communicator 203 for at least receiving data communicated by the transmission unit 602, and a module controller 201 for bringing the at least one light emitter 202 into one of its states depending on received data. Such display system 601 may be implemented in a performance event, such as a musical concert or a sports event for example, where a plurality or all of the members of an audience or spectators, or all or a plurality of audience or spectator locations such as seats are equipped with a lighting module 200. Data transmitted from the transmission unit 602 towards each of the lighting modules 200 may be used by the audience or spectators, for example to generate an image.

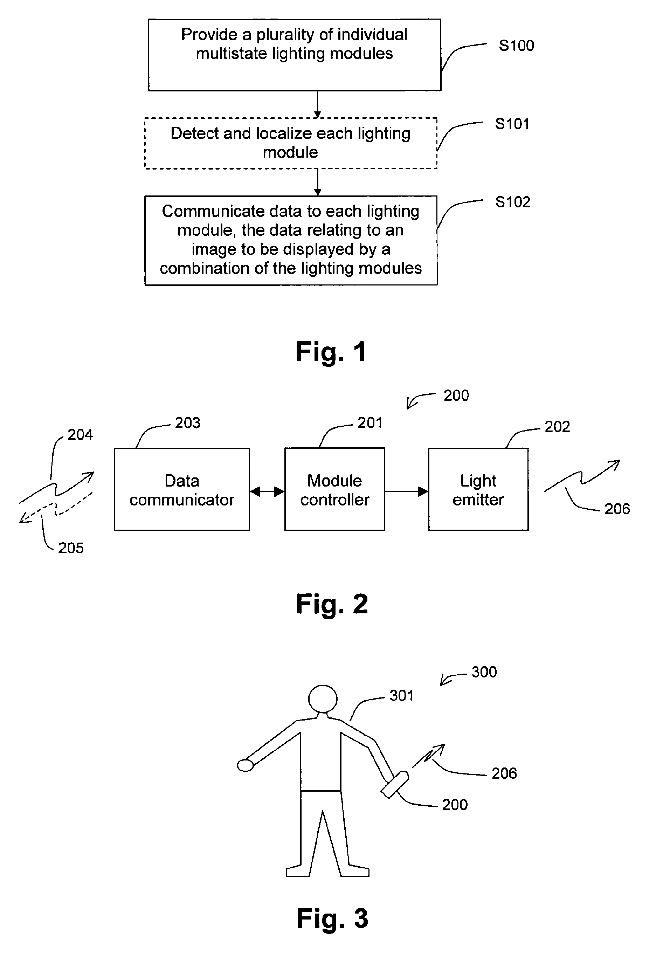

Figure 1 is a flow diagram of embodiments of the method of the present invention. The method comprises step S100, optionally step S101 and step S102 and is for communicating data to a plurality of lighting modules 200 grouped within a geographical area, the data communicated relating to an image to be displayed by a combination of the lighting modules. The data visualised by each of the lighting modules 200 is one or at most a few pixels of the complete image to be displayed by the display system 601.

At step S100, a plurality of individual lighting modules 200 are provided, e.g. during a performance event each audience or spectator member is equipped with an individual lighting module 200. According to an embodiment, each lighting module 200 has been pre-programmed with a unique address and/or unique identification tag, e.g. identification number, and therefore the transmission unit 602 may communicate with each lighting module 200 individually. Preferred embodiments of the lighting module 200 are described in more detail later in the description with respect to Figure 2.

Referring again to Figure 1, according to an embodiment of the present invention, at step S101 the central controller 604 within the transmission unit 602 operates to detect and localise each lighting module 200, i.e. determine the position thereof. The display system 601 comprises one or more first data communication units 605 in communication with each other located at one or more positions in and/or above and/or around the audience or spectator arena. At the end of step S101, the central controller 604 of the transmission unit 602 knows the location of each lighting module 200 and each lighting module 200 knows its own location. Examples of this detection and localisation process will be described in more detail below.

At step S102 the transmission unit 602, by means of its first data communication means 605, communicates data to each lighting module 200 where such data is relevant to each lighting module 200 at that time and for the current application.

According to the present invention, the communicated data relates to video picture information such that each lighting module 200 outputs light of an intensity and possibly colour relating to a pixel within the video picture. Persons skilled in the art will know that a pixel is the term often used to represent a picture element when pictures are broken down into an array of elements for display purposes. In this way the user equipment, i.e. lighting modules 200, of the members of the audience or the spectators effectively form part of a light emitting display device. A pixel may include light emitting subpixels.

According to another embodiment of the present invention, the netcentric detecting of the location of the lighting modules may be omitted. In this case, co-ordinates are transmitted to the lighting modules, which co-ordinates are determined by the geographical area of interest, e.g. the borders of that geographical area where the image is to be displayed, for example a sports arena. The lighting modules decide, for example based on GPS positioning information, whether or not they are present in the geographical area of interest. Image information containing geographical co-ordinates encoded therein is broadcast to each of the lighting modules. The lighting modules, knowing their position and receiving the image information, extract from the received image information the portion of interest, i.e. work out from the received complete image information which part they are supposed to display.

In some embodiments data is additionally communicated from each lighting module 200 to the transmission unit 602, for example its geographical localisation.

Steps S101 and S102 are continuously repeated during system operation so that for example as audience or spectator members move around an arena their new locations are determined so as to receive correct position-related information.

Example means of accomplishing steps S101, S102 and S103 will now be described in more detail.

Figure 2 is a block diagram of an example lighting module 200 according to an embodiment of the present invention, which lighting module 200 may be used e.g. to equip each spectator or each member of an audience. Lighting module 200 comprises module controller 201, light emitter 202, and data communicator 203. The module controller 201 receives data from and may optionally send data to the data communicator 203. The module controller 201 sends control and power signals to the light emitter 202. The light emitter 202 comprises one or more visible-light emitters and has at least two states, i.e. e.g. at least an ON and an OFF state. The one or more visible-light emitters may be capable of emitting white light, or alternatively may be able to emit multi-coloured light such as red (R), green (G) and blue light (B) 206; persons skilled in the art will know that combinations of R, G and B can be used to produce any desired pixel colour. The light emitter 202 may preferably comprise one or more LEDs (light emitting diodes), however persons skilled in the art will know that any other known visible-light emitters may be used, such as for example: electroluminescent, backlit-liquid-crystal, incandescent, or plasma. The light emitter 202 may provide pixel information such that observers of the audience or spectators see video pictures produced across the audience or spectators as described above. The light emitter 202 may send data (position and/or identification data for example) to the transmission unit 602. The light emitter 202 may provide position-related information to the audience member or spectator equipped with the lighting module 202. The data communicator 203 comprises wireless communication means such as for example a light detector (for visible, infra-red, or ultra-violet for example), radio-frequency antenna, and/or inductive-coupling antenna. The data communicator 203 will receive data 204 from the transmission unit 602 and may receive data from nearby lighting modules 200. The data communicator 203 may send data 205 to the first data communication means 606 of the transmission unit 602 and/or may send data to nearby lighting modules 200. The data communicator may be adapted to receive geographical position data, e.g. by means of a GPS receiver.

In a preferred embodiment, the lighting modules 200 are video oriented, i.e. adapted for displaying video information. This implies that it is preferred to have a wide viewing angle (typically 120°) and a wide colour triangle. Preferably, the plurality of lighting modules are calibrated so that they all generate a same colour when driven the same way. This calibration may be obtained by gathering the light output information, in particular colour information, and defining the smallest colour triangle common to all lighting modules. This information is then provided to the processing means of each lighting module, for use during processing of data received by the lighting modules.

Figure 3 is a diagrammatic representation 300 of an audience member or spectator 301 equipped with a lighting module 200. The audience member or spectator 301 is shown holding a lighting module 200 and emitted light 206 is shown. However, the lighting module 200 may alternatively be carried in other ways for example as a badge, bracelet, necklace, pendant or as an integral part of an item of apparel. A further alternative method of equipping an audience member or spectator 301 with a lighting module where audiences or spectators are seated is such that a lighting module is built-in or attached to the seat.

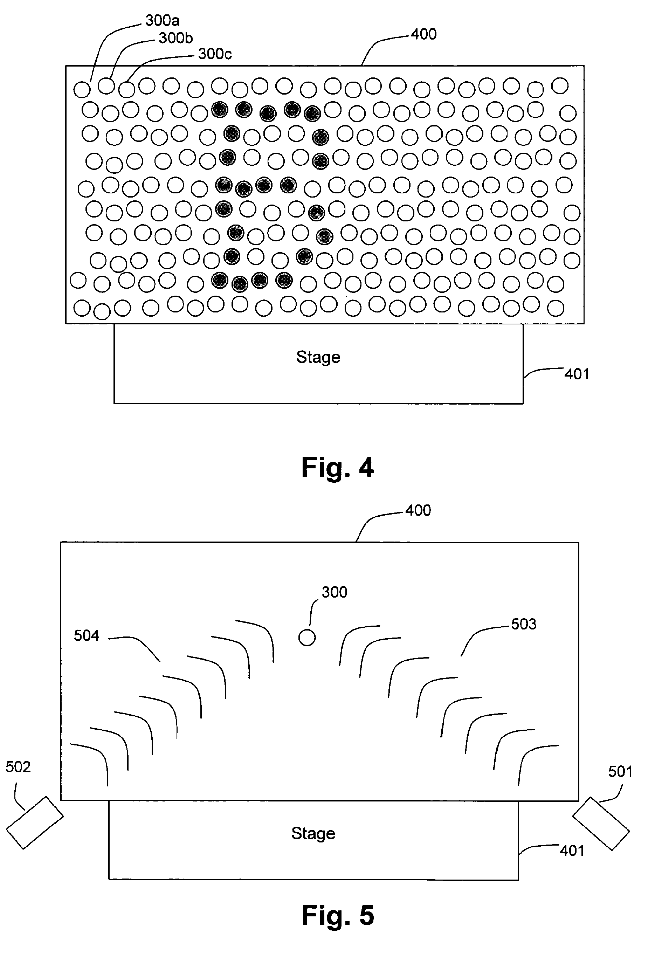

Figure 4 is a plan view of an example audience in an arena 400 next to a performance stage 401. In this example the audience comprises approximately 120 people 300 equipped with a lighting module (for clarity only three are labelled: 300a, 300b and 300c). Persons skilled in the art will know that an arena 400, i.e. geographical area of interest for the present invention, and/or stage 401 may be of any size or shape and may be enclosed and/or in the open-air. In this example each circle representing an audience member 300 equipped with a lighting module 200 also represents the light 206 emitted from the lighting module 200 and in the example shown the display screen comprising the user equipment carried by the audience members 300 is showing a capital letter B. Persons skilled in the art will know that any picture, text and/or graphic images still and/or moving video may be displayed on the display screen comprising the user equipment carried by the audience members.

Example methods to accomplish step S101 (Figure 1) will now be described.

A first preferred method to accomplish step S101 (Figure 1) uses a handshake principle where each lighting module 200 (Figure2) communicates with nearby neighbouring lighting modules 200 such that all lighting modules 200 know the identification data, e.g. identification numbers, of nearby lighting modules 200. Such information is communicated to the transmission unit 602 such that the central controller 604 can operate suitable algorithms to build-up a map of the sequence of lighting module locations and therefore will know the position of each lighting module 200. The position information relating to each lighting module 200 is then communicated to that lighting module 200 via each lighting module's data communicator 203.

A second preferred method to accomplish step S101 (Figure 1) uses a camera or scanning light sensor positioned above the audience or spectators and is therefore able to observe the audience or spectators, and an example of such an observed audience or spectators is shown in Figure 4. The camera or scanning light sensor communicates with the transmission unit 602 and the transmission unit 602 communicates with all lighting modules 200 to request that they send their unique identification data, e.g. identification numbers, using coded modulation of their light emitters 202. The transmission unit 602 running a suitable algorithm extracts the identification information and position information relating to each identified lighting module 200 from data communicated from the camera or scanning light sensor and therefore will know the position of each lighting module 200. The position information relating to each lighting module 200 is then communicated to that lighting module 200 via each lighting module's data communicator 203.

A third preferred method to accomplish step S101 (Figure 1) uses a camera positioned above the audience or spectators as described for the second preferred method above. The camera communicates with the transmission unit 602 and the transmission unit 602 communicates with all lighting modules 200 individually using their unique identification data, e.g. identification numbers, one at a time to request that they momentary light up their light emitters 202. The transmission unit 602 running a suitable algorithm extracts the position information from the camera relating to each known lighting module 200 and therefore will know the position of each lighting module 200. The position information relating to each lighting module 200 is then communicated to that lighting module 200 via each lighting module's data communicator 203.

A fourth preferred method to accomplish step S101 (Figure 1) uses two or more transmitters, which are usually located at corners of an arena. Figure 5 shows an example plan view of an arena 400 and stage 401 showing examples of two such transmitters 501 and 502. Each transmitter 501, 502 sends a signal in only one direction shown as 503 and 504 respectively. The signals may be orthogonal. In Figure 5 only one audience or spectator member 300 equipped with a lighting module 200 is shown for clarity purposes. The transmitters 501, 502 may scan the arena 400 such that as each lighting module 200 receives such scanning signals 503, 504, it responds by sending its unique identification data, e.g. identification number. The transmitters 501, 502 communicate with the transmission unit 602. The transmission unit 602 running a suitable algorithm extracts the identification information and position information relating to each identified lighting module 200 from data communicated from the transmitters 501, 502 and therefore will know the position of each lighting module 200. The position information relating to each lighting module 200 is then communicated to that lighting module 200 via each lighting module's data communicator 203.

A fifth method to accomplish step S101 (Figure 1) uses a local version of known global positioning systems. Two or more local transmitters send position and time information on a continuous basis and examples of such transmitter locations are shown as 501 and 502 on Figure 5, however in this case each of their signals are broadcast over the whole of the arena 400. The module controller 201 within each lighting module 200 operates a suitable algorithm (of type known to persons skilled in the art) to determine its own position derived from the signals received via data communicator 203 from transmitters 501 and 502 (Figure 5).

Persons skilled in the art will know that the methods described above to accomplish step S101 (Figure 1) are examples only and that other known communication and location methods may be used and/or combinations of the example methods may be used. The accuracy of the detection system determines the quality of the image shown. With a high accuracy, the lighting modules of the people grouped within the geographical area can form part of a high resolution display system, possibly resulting in a high resolution image being shown. With a lower position detection accuracy, the squares that define a pixel must be much bigger, hence resulting in a lower resolution image being shown.

Furthermore, as already described above, the step of detecting and localising each lighting module is optional and may be left out.

Example methods to accomplish step S102 (Figure 1) where such communicated data is used to display images will now be described. Depending on the available transmission technology, high resolution or low resolution images can be broadcast. The decision to broadcast high resolution or low resolution images can furthermore also be based on any of the available processing power in the lighting modules 200, and/or the accuracy of the position determination. For a same crowd being present, broadcasting a higher resolution image can result in the same image quality when processing power of the lighting module or the accuracy of the location determination is not powerful enough to take advantage of the extra information present in the high resolution image. Alternatively, a higher resolution result of the image may be achieved if both processing power of the lighting module and accuracy of the location determination is sufficiently high.

A first preferred method to accomplish step S102 (Figure 1) where the communicated data is used to display images is such that the transmission unit 602 sends complete image information to each lighting module 200. Each lighting module 200 knows its position and so when the pixel information relating to that position is received by its data communicator 203 and communicated to its module controller 201, the module controller 201 works out which pixel information is to be displayed by the lighting module 200 and causes that pixel information to be displayed by the light emitter 202.

A second preferred method to accomplish step S102 (Figure 1) where such communicated data is used to display images is such that each lighting module 200 communicates with the transmission unit 602 to request pixel data relating to the lighting module's known position. Then, when the pixel information relating to that position is received by the lighting module's data communicator 203 and communicated to its module controller 201, the module controller 201 causes the pixel information to be displayed by the light emitter 202.

A third preferred method to accomplish step S102 (Figure 1) where such communicated data is used to display images is such that the transmission unit 602 knows the position of each lighting module 200 and sends pixel information relating to each lighting module 200 to each lighting module 200 in turn. Each lighting module 200 receives its pixel data at the communicator 203 and communicates the data to its module controller 201. The module controller 201 causes the pixel information to be displayed by the light emitter 202.

It is clear that the distribution of data towards the lighting modules 200 and the refresh of such data should preferably be synchronised in order to allow the lighting modules 200 to receive and process the data received, all lighting modules 200 at the same time. Therefore, the display system may preferably be arranged with synchronisation means to form a substantially real-time system to display video.

In some applications it may be advantageous to sub-divide arena areas with additional system apparatus such that fewer numbers of pixels are controlled by each corresponding transmission unit sub-set.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. Method for communicating data for use with a plurality of persons (300) grouped within a geographical area, each person being at a location within the geographical area and having an individual lighting module (200), the method comprising:
- communicating (S102) data (204) to each of the lighting modules (200), wherein the data (204) communicated relates to an image to be displayed by a combination of the lighting modules (200).

2. Method according to claim 1, wherein the lighting module (200) is a LED module.

3. Method according to any of the previous claims, wherein the lighting module (200) is a multi-colour lighting module.

4. Method according to claim 3, wherein the lighting module (200) is an RGB module.

5. Method according to any of the previous claims, furthermore comprising determining the position of the individual lighting modules (200) before communicating (S102) data (204) to each of the lighting modules (200).

6. Method according to claim 5, wherein determining the position of the individual lighting modules (200) is performed by the lighting modules themselves.

7. Method according to claim 5, wherein determining the position of the individual lighting modules (200) comprises detecting and localising (S101) the lighting modules (200).

8. Method according to claim 7, wherein detecting and localising (S101) the lighting modules (200) comprises communicating between neighbouring lighting modules (200) so as to obtain identification data of neighbouring lighting modules (200).

9. Method according to claim 7, wherein detecting and localising (S101) the lighting modules (200) comprises using a camera or scanning light sensor for observing the plurality of persons.

10. Method according to claim 7, wherein detecting and localising (S101) the lighting modules (200) comprises using a transmitter sending a signal upon reception of which the lighting modules (200) respond by sending their unique identification data.

11. Method according to claim 7, wherein detecting and localising (S101) the lighting modules (200) comprises using a global positioning system.

12. Method according to any of claims 5 to 11, wherein communicating data (S102) to each of the lighting modules (200) comprises sending complete image information to each lighting module (200) which extracts information corresponding to its determined position.

13. Method according to claim 12, wherein communicating data (S102) to each of the lighting modules (200) comprises sending complete information to each lighting module (200) with geographical co-ordinates encoded therein.

14. Method according to any of claims 5 to 11, wherein communicating data (S102) to each of the lighting modules (200) comprises sending to each lighting module (200) image information corresponding to its determined position.

15. Method according to any of the previous claims, furthermore comprising synchronising data communicated to each of the lighting modules (200).

16. Display system (601) for displaying an image, the display system (601) comprising
a transmission unit (602) and
a plurality of individual lighting modules (200) each comprising at least one light source (202) having at least two states, wherein the lighting modules (200) are adapted for being provided to a plurality of persons (300),
a communication means (203) for receiving data, and a processing means (201) for bringing the at least one light source (202) into one of its states depending on received data,
means for determining the position of the individual lighting modules (200),
the lighting modules (200) being adapted for receiving data from the transmission unit (602) and for displaying at least part of this received data as at least a pixel of the image to be displayed depending on the determined position of the lighting modules (200)

17. Display system (601) according to claim 16, wherein the means for determining the position of the individual lighting modules is external to the lighting modules (200).

18. Display system (601) according to claim 16, wherein the means for determining the position of the individual lighting modules is internal to the lighting modules (200).

19. Display system (601) according to any of claims 16 to 18, wherein the lighting module (200) is a LED module.

20. Display system (601) according to any of claims 16 to 19, wherein the lighting module (200) is a multi-colour lighting module.

21. Display system (601) according to claim 20, wherein the lighting module is an RGB module.

22. Display system according to any of the claims 16 to 21, wherein the lighting modules are movable.

23. Display system according to any of claims 16 to 22, furthermore comprising synchronisation means for synchronising display of the data received by the lighting modules (200).
